# FASCICULE DE BREVET EUROPEEN

(11) **EP 3 087 358 B1**
(45) Date de publication et mention de la délivrance du brevet: **31.07.2019**
(21) Numéro de dépôt: 14830990.9
(22) Date de dépôt: 19.12.2014
(51) Int. Cl.: G01D 5/353, G01K 11/32, G01L 1/24, G01H 9/00

(54) **DISPOSITIF DE CARACTÉRISATION D'UN PHÉNOMÈNE PHYSIQUE PAR ABLATION DE FIBRE OPTIQUE À RÉSEAUX DE BRAGG**
VORRICHTUNG ZUR CHARAKTERISIERUNG EINES PHYSIKALISCHEN PHÄNOMENS DURCH ABLATION EINER OPTISCHEN FASER MIT BRAGG-GITTERN
DEVICE FOR CHARACTERIZING A PHYSICAL PHENOMENON BY ABLATION OF AN OPTICAL FIBRE WITH BRAGG GRATINGS

(30) Priorité: 24.12.2013 FR 1363568
(43) Date de publication de la demande: 02.11.2016
(73) Titulaire: Commissariat à l'Energie Atomique et aux Energies Alternatives, 75015 Paris (FR)
(72) Inventeur: BENIER, Jacky, F-91630 Avrainville (FR)
(74) Mandataire: Santarelli
(86) Numéro de dépôt international: PCT/FR2014/053470
(87) Numéro de publication internationale: WO 2015/097383

(56) Documents cités:
- US-A- 5 734 623
- UDD ERIC ET AL: "Improvements to high-speed monitoring of events in extreme environments using fiber Bragg grating sensors", FIBER OPTIC SENSORS AND APPLICATIONS IX, SPIE, 1000 20TH ST. BELLINGHAM WA 98225-6705 USA, vol. 8370, no. 1, 11 mai 2012 (2012-05-11) , pages 1-13, XP060002573, DOI: 10.1117/12.915726
- ERIC UDD ET AL: "Development of high speed fiber grating sensor solutions for measuring velocity, position, pressure and temperature", PROCEEDINGS OF SPIE, vol. 8722, 29 mai 2013 (2013-05-29), page 872205, XP055142275, ISSN: 0277-786X, DOI: 10.1117/12.2018126
- LUN CHENG: "Fiber-optic sensors in explosion and detonation experiments", SPIE NEWSROOM, 2007, XP055142223, DOI: 10.1117/2.1200705.0729
- VAN 'T HOF P. G. ET AL: "Dynamic pressure measurement of shock waves in explosives by means of a fiber Bragg grating sensor", PROCEEDINGS OF SPIE, vol. 6279, 26 janvier 2007 (2007-01-26), pages 62791Y-62791Y-7, XP055142246, ISSN: 0277-786X, DOI: 10.1117/12.725258
- RODRIGUEZ G ET AL: "Chirped fiber Bragg grating detonation velocity sensing", REVIEW OF SCIENTIFIC INSTRUMENTS, AIP, MELVILLE, NY, US, vol. 84, no. 1, 10 janvier 2013 (2013-01-10), pages 1-10, XP012171335, ISSN: 0034-6748, DOI: 10.1063/1.4774112 [extrait le 2013-01-10]
- J Benterou ET AL: "In-Situ Continuous Detonation Velocity Measurements Using Fiber-optic Bragg Grating Sensors", , 13 mars 2008 (2008-03-13), XP055142210, Extrait de l'Internet: URL:http://www.osti.gov/servlets/purl/9227 80-0fBvMv/ [extrait le 2014-09-23]
- Anonymous: "Fiber Bragg grating - Wikipedia, the free encyclopedia", , 2 juillet 2013 (2013-07-02), XP055183111, Extrait de l'Internet: URL:http://web.archive.org/web/20130702031 955/http://en.wikipedia.org/wiki/Fiber_Bra gg_grating [extrait le 2015-04-15]
- Marcelo M. ET AL: "A Guide to Fiber Bragg Grating Sensors" In: "Current Trends in Short- and Long-period Fiber Gratings", 15 mai 2013 (2013-05-15), InTech, XP055183115, ISBN: 978-9-53-511131-3 DOI: 10.5772/54682, page 4, dernier alinéa; figure 2

## Description

La présente demande concerne un dispositif de caractérisation d'un phénomène physique.

Elle concerne plus particulièrement un dispositif de caractérisation d'un phénomène physique produisant une pression sur une fibre, pouvant conduire, dans certains cas, à une ablation de celle-ci, et/ou pouvant conduire à une modification des propriétés réfléchissantes de réflecteurs insérés dans la fibre optique, par exemple, une fibre avec des réseaux de Bragg.

Pour détecter temporellement, c'est-à-dire à quel moment a lieu, le passage d'un phénomène physique et en mesurer la vitesse de propagation, un dispositif de mesure traditionnellement utilisé est par exemple un capteur électrique nommé généralement « circuit imprimé ». Un tel capteur comporte un circuit électrique qui se ferme au passage d'une onde de pression. Plus précisément, un tel capteur comporte des pistes de cuivre déposées sur un substrat traditionnellement en Kapton®. Lors du passage d'une onde de pression, la piste se ferme (ce qui génère un court-circuit) et délivre alors une impulsion électrique de plusieurs dizaines de volts (via une boite d'impulsions) dont l'information temporelle est exploitée. En effet, connaissant la position de chaque piste, une vitesse de défilement moyenne de l'onde peut alors être calculée. Or un tel capteur est souvent sensible à l'amplitude de la pression de sollicitation et ne répond donc pas toujours convenablement aux faibles sollicitations. Il nécessite en outre d'être alimenté électriquement et peut être sensible à des interférences électromagnétiques. De plus, un tel capteur présente souvent un encombrement tel que cela peut présenter une contrainte pour l'implanter dans une structure.

Depuis une vingtaine d'années environ, un dispositif de mesures de phénomène physique comprend de plus en plus souvent un capteur à fibre optique à la place d'un capteur électrique du type précité, résistif ou capacitif, par exemple pour contrôler des infrastructures du génie civil.

Les articles "Improvements to high-monitoring of events in extreme environments using fibre Brgaa grating sensors", E. Udd et al., Fiber Optic Sensors and Applications IX, Proc. of SPIE Vol. 8370, 2012, "Development of high speed fiber grating sensor solutions for measuring velocity, position, pressure and temperature", E. Udd et al., Fiber Optic Sensors and Applications X, Proc. of SPIE Vol. 8722, 2013, "Fiber-optic sensors in explosion and détonation experiments", L.K. Cheng et al., SPIE Newsroom, 2007, et "Dynamic pressure measurement of shock waves in explosives by means of a Fiber Bragg Grating sensor", P.G. van 't Hof et al., 27th International Congress on High-Speed Photography and Photonics, Proc. of SPIE Vol. 6279, décrivent de tels capteurs à fibre optique.

US5734623 décrit par ailleurs un capteur à fibre optique pour la mesure de la vitesse de propagation d'une onde acoustique dans une colonne de liquide.

Une fibre optique présente l'avantage d'être insensible aux perturbations électromagnétiques, d'être relativement souple et de faible encombrement (une fibre optique présente un diamètre standard de l'ordre d'environ au plus 250 µm). En outre, le capteur, une source de lumière infrarouge et un détecteur peuvent être déportés à plusieurs centaines de mètres l'un de l'autre car la fibre optique atténue très peu la lumière autour de 1550 nm. En effet, l'atténuation est alors de l'ordre d'environ 0,2 dB/km.

Des essais ont par exemple été réalisés avec une fibre optique plongée au sein d'un matériau explosif (nitrométhane). Lors de l'explosion, un faisceau lumineux injecté dans la fibre est réfléchi au niveau d'un front de choc qui ablate la fibre. La mesure de vitesse ou du déplacement du front de choc est par exemple réalisée par interférométrie laser (par exemple par des mesures de vitesse « IDL » pour « Interférométrie Doppler Laser », ou « PDV » pour « Photonic Doppler Velocimetry »). La vitesse moyenne est mesurable avec cette technique mais la localisation spatiale de l'évènement dans la fibre optique reste difficile à apprécier. De plus, cette technique fonctionne mieux si la fibre est noyée dans l'explosif pour avoir une attaque concentrique et symétrique de la fibre. La mise en oeuvre est donc délicate, notamment dans de la matière solide.

Il est alors apparu que le capteur est d'une part trop rigide, et d'autre part fragile puisque la partie active est dénudée.

Parmi les capteurs à fibre optique, des capteurs à fibre optique à réseaux de Bragg ont majoritairement été développés ces dernières années.

Le fonctionnement d'un tel capteur repose sur une mesure d'un décalage entre une longueur d'onde d'un faisceau de lumière réfléchie par rapport à la longueur d'onde de Bragg du réseau. Ce décalage varie en fonction de la température ou d'une contrainte appliquée à la fibre.

En vue de mesurer des perturbations liées à la température, aux contraintes (variations de pression) ou aux déformations sur des matériaux et des structures, des dispositifs comportant des capteurs optiques à réseau de Bragg, ont été développés. Plus récemment, ces capteurs ont été utilisés pour mesurer le passage d'une onde de détonation, ou d'un phénomène physique rapide, c'est-à-dire dont la vitesse de propagation est de l'ordre d'au moins environ une centaine de mètres par seconde. Cependant, il est encore difficile, de localiser précisément (c'est-à-dire par exemple avec une incertitude inférieure à environ 1 mm) la position du front de choc dans la fibre à un instant donné avec ces dispositifs.

De plus, un tel capteur reste délicat à intégrer dans un matériau et/ou une structure à solliciter et il est difficile à étalonner.

Par ailleurs, une fibre optique à réseaux de Bragg fonctionnement difficilement sous une sollicitation dissymétrique.

Il est aussi difficile de fabriquer un réseau d'une longueur supérieure à un mètre environ, tandis que l'utilisation d'une fibre optique à réseaux de Bragg recherche généralement à avoir un réseau d'une longueur la plus grande possible pour mesurer l'évolution d'un phénomène en continu. A titre informatif, actuellement, les réseaux de Bragg mesurent généralement quelques centimètres. De tels réseaux, les plus longs possible, sont en outre généralement chirpés afin de permettre d'étudier l'évolution des pertes de réflexion en fonction de la longueur d'onde au fur et à mesure que le réseau est détruit.

Par ailleurs, pour analyser les signaux optiques de ces capteurs, les méthodes d'analyse de signal reposent sur des mesures spectrales, soit avec une technique de balayage (défilement d'un laser accordable couplé à une photodiode), soit avec un analyseur de spectre optique couplé à une source de spectre large. Mais l'utilisation de telles techniques est limitée, notamment en considérant leur résolution temporelle ; elles sont par exemple inadéquates pour des émissions de signaux à intervalles inférieurs à environ 1 µs.

L'objet de la présente demande vise à remédier au moins en partie aux inconvénients précités, et à mener en outre à d'autres avantages.

L'objet de la présente demande vise plus particulièrement à améliorer les réponses temporelles des dispositifs à fibres existants, notamment pour détecter un passage de phénomène physique et en mesurer une vitesse de propagation.

A cet effet, est proposé, selon un premier aspect, un dispositif de caractérisation d'un phénomène physique comportant :
- au moins une fibre optique à réseaux de Bragg, destinée à être disposée transversalement à un front de propagation d'un phénomène physique à caractériser et comportant une pluralité de réseaux de Bragg entre une première extrémité et une seconde extrémité, chaque réseau de Bragg étant configuré pour réfléchir une bande étroite de longueurs d'onde spécifiques qui lui est associée,
- au moins une source d'éclairage laser à large spectre, configurée pour émettre un rayonnement laser contenant les longueurs d'ondes associées aux réseaux de Bragg,
- un circulateur optique configuré pour transmettre le rayonnement laser de l'au moins une source laser à la première extrémité de la fibre optique et capter les rayonnements réfléchis renvoyés par les réseaux de Bragg de la fibre optique à réseaux de Bragg par la première extrémité,
caractérisé en ce que chaque réseau de Bragg de l'au moins une fibre optique est court et à pas constant avec un pas qui lui est propre, et en ce que le dispositif comporte en outre un détecteur photoélectrique configuré pour mesurer en sortie du circulateur optique, en fonction du temps, un flux global de l'ensemble des rayonnements réfléchis captés par le détecteur photoélectrique.

« Flux global » désigne ici toute grandeur représentant une quantité globale de rayonnement réfléchi, exprimé en watt.

Une amplitude du signal est ainsi proportionnelle au flux photométrique.

Lors de la mise en oeuvre du dispositif selon l'invention, le passage d'une onde, par exemple une onde de choc, détruit progressivement chacun des réseaux de Bragg de la pluralité de réseaux de Bragg de la fibre optique. Il est ainsi possible d'analyser tout type de phénomène physique quel qu'il soit tant que la fibre est alors ablatée.

La source laser est avantageusement une source laser large spectre, c'est-à-dire configurée pour émette un spectre de largeur comprise entre environ 50 nm et environ 150 nm, par exemple environ 100 nm.

Selon un exemple de réalisation intéressant, la source d'éclairage laser est de type ASE (« Amplified Spontaneous Emission »).

La source d'éclairage laser est par exemple configurée pour émettre un rayonnement de longueurs d'ondes dans le visible ou dans l'infrarouge, par exemple comprises entre environ 1530 nm et environ 1580 nm.

Pluralité signifie ici que la fibre optique comporte au moins deux réseaux de Bragg, et de préférence une demi-douzaine voire davantage, le nombre de réseaux et la distance en séparant deux consécutifs étant fonction de la résolution en vitesse souhaitée. Selon un exemple privilégié de réalisation, la fibre optique à réseaux de Bragg comporte neuf réseaux de Bragg.

En outre, on entend ici par « bande étroite de longueurs d'onde » qu'un réseau de Bragg est configuré pour réfléchir un signal d'une largeur spectrale comprise entre environ 1 nm et environ 10 nm, voire entre environ 1 nm et environ 5 nm, à -3dB autour d'une longueur d'onde qui lui est spécifique.

Dans le cadre de la présente demande, les intervalles cités se comprennent bornes incluses.

De plus, on entend par « spécifique » que chaque réseau renvoie une bande étroite de longueurs d'onde différente des autres, c'est-à-dire, par exemple, avec un recouvrement spectral avec un autre réseau inférieur ou égal à environ 10% de la largeur de bande spectral de la lumière réfléchie.

Si tous les réseaux renvoyaient la même longueur d'onde, le détecteur enregistrerait seulement les variations de flux des derniers réseaux (ceux les plus proches physiquement du détecteur) car la transmission des réseaux est d'environ 10% ; le dernier réseau détruit aurait donc l'amplitude la plus importante. Ainsi, pour affiner la mesure, l'au moins une fibre optique possède par exemple des réseaux de Bragg de pas, voire optionnellement de longueur, différents les uns des autres.

Ainsi, le pas de chacun des réseaux de Bragg de la pluralité de réseaux de Bragg est par exemple différent des autres pour réfléchir une longueur d'onde spécifique du rayonnement émis par la source laser, en tenant compte par exemple de l'amplitude d'émission spectrale de la source qui n'est pas constante sur tout le spectre. La longueur de chaque réseau permet d'adapter l'amplitude du signal réfléchi à celle du signal émis autour de la longueur d'onde correspondante.

Une longueur d'onde réfléchie par chacun des réseaux de Bragg de la pluralité de réseaux de Bragg est par exemple distante d'environ 2 nm à 8 nm de la longueur d'onde réfléchie par un autre réseau de Bragg.

En outre, chaque réseau de Bragg de la pluralité de réseaux de Bragg est un réseau de Bragg à pas constant. Selon un exemple de réalisation, chaque réseau de Bragg a un pas compris entre environ 400 nm et environ 600 nm, voire par exemple entre environ 470 et 540 nm, il vaut par exemple environ 500 nm pour un des réseaux de Bragg de la pluralité.

Par exemple, chaque réseau de Bragg de la pluralité de réseaux de Bragg est optionnellement apodisé. Une apodisation permet d'obtenir une réponse spectrale lissée en atténuant les rebonds spectraux du signal réfléchi. En d'autres termes, une apodisation est analogue à un filtre. Une technique possible consiste par exemple à modifier l'amplitude de la modulation d'indice dans la fibre.

Le pas de chaque réseau détermine la longueur d'onde du spectre réfléchie et la longueur du réseau détermine sa largeur spectrale.

Par exemple, les réseaux de Bragg de la pluralité de réseaux de Bragg sont configurés pour réfléchir conjointement des longueurs d'onde sur une partie, voire sensiblement toute la largeur du rayonnement émis par l'au moins une source d'éclairage laser à large spectre.

Par exemple, chaque réseau de Bragg de la pluralité de réseaux de Bragg comporte entre environ 200 et environ 6000 gravures.

Chaque réseau de Bragg de la pluralité de réseaux de Bragg comporte un minimum de gravures, c'est-à-dire le moins possible, pour localiser au mieux la zone de réponse du réseau de Bragg considéré.

On entend enfin par « court » que chacun des réseaux de Bragg de la pluralité de réseaux de Bragg de la fibre optique a une longueur de gravure la plus courte possible, par exemple inférieure ou égale à environ 3 mm, par exemple chaque réseau de Bragg de la pluralité de réseaux de Bragg de la fibre optique a une longueur de gravure comprise entre environ 0,05 mm et environ 3 mm, par exemple environ 1 mm, voire comprise entre environ 0,1 et environ 0,2 mm. Plus un réseau est court, meilleure peut alors être sa localisation. Autrement dit, pour avoir la meilleure localisation possible d'un réseau, chaque réseau est de préférence le plus court possible.

La longueur de gravure, ainsi qu'un temps d'insolation pour réaliser les traits de chaque réseau, déterminent notamment le taux de réflexion et la largeur spectrale réfléchie.

En outre, la taille des réseaux de Bragg est liée aux longueurs d'onde du rayonnement induit. Plus la source laser est configurée pour émettre un rayonnement à faibles longueurs d'ondes, plus la longueur des réseaux peut être réduite.

Selon un exemple intéressant de réalisation, tous les réseaux de Bragg de la pluralité de réseaux de Bragg ont une même longueur.

Selon un mode de réalisation intéressant, deux réseaux de Bragg consécutifs de la pluralité de réseaux de Bragg sont distants l'un de l'autre d'une distance par exemple comprise entre environ 5 mm et environ 25 mm selon la longueur de chaque réseau et la résolution de mesure souhaitée, par exemple environ 10 mm, ce qui correspond à une incertitude sur la distance entre deux réseaux consécutifs de 0,1 mm, soit à une incertitude d'environ 1%.

Par exemple, deux réseaux de Bragg consécutifs de la pluralité de réseaux de Bragg sont distants les uns des autres d'une même distance, c'est-à-dire que les distances séparant deux réseaux de Bragg consécutifs sont toutes identiques, les réseaux de Bragg sont disposés régulièrement dans la fibre optique.

La distance entre deux réseaux consécutifs est par exemple identifiée par la distance séparant deux pics d'amplitude de réflexion consécutifs le long de la fibre optique.

Ainsi, selon un mode intéressant de réalisation, deux réseaux consécutifs sont distincts physiquement en terme de gravure sur la fibre, et en terme de longueurs d'onde réfléchies (c'est-à-dire avec un recouvrement inférieur ou égal à environ 10% de la lumière réfléchie).

Au fur et à mesure de la destruction des réseaux de Bragg, le rayonnement reçu par la fibre est de moins en moins réfléchi, c'est-à-dire que l'amplitude de flux global du rayonnement réfléchi décroit notablement pour chaque réseau de Bragg détruit.

Une atténuation du rayonnement réfléchi, provoquée par la destruction de chaque réseau lors du passage d'une onde, est enregistrée avec une précision temporelle suffisante, c'est-à-dire par exemple avec une cadence d'enregistrement prédéterminée comprise par exemple entre environ 0,1 ns et environ 10 ns, par exemple d'environ 1 ns. De manière générale, la fréquence d'enregistrement est à adapter en fonction du signal de vitesse à mesurer, elle est généralement de l'ordre du double de la bande passante du détecteur.

Un tel dispositif est en outre moins sensible, voire insensible, aux perturbations électromagnétiques et/ou à des variations de température.

Le dispositif selon l'invention offre aussi un encombrement plus réduit pour une épaisseur équivalente à celle d'un capteur à fibre de l'art antérieur précédemment décrit. De plus, il possède une plus large plage d'utilisation, avec en particulier une sensibilité aux faibles pressions de sollicitation, comme par exemple une dizaine de kPa. Une meilleure sensibilité permet en outre de mieux percevoir des variations d'amplitude du signal pour une plage de longueurs d'onde donnée.

Un tel dispositif est aussi apte à fonctionner avec une sollicitation dissymétrique. En effet, la direction de la pression de sollicitation a peu d'importance sur la réponse du capteur, contrairement à l'action de pression ou de destruction des gravures qui provoque une atténuation du signal photométrique réfléchi.

Selon un exemple intéressant de réalisation, le détecteur photoélectrique est aussi configuré pour convertir le flux global du rayonnement réfléchi mesuré en sortie du circulateur optique en un signal électrique.

Et par exemple, le dispositif comporte en outre un numériseur configuré pour enregistrer le signal électrique en sortie du détecteur photoélectrique à une cadence d'enregistrement prédéterminée. La cadence prédéterminée est par exemple comprise entre environ 10⁸ et 10¹⁰ mesures par secondes, soit un intervalle temporel entre les points enregistrés compris entre environ 0,1 ns et environ 10 ns, par exemple d'environ 1 ns. Avantageusement, une fréquence d'échantillonnage correspond au double d'une valeur de bande passante du détecteur. Selon un exemple de réalisation intéressant, le détecteur photoélectrique comporte une bande passante comprise entre environ 50 MHz et 5 GHz, par exemple égale à environ 1 GHz, voire avantageusement environ 0,5 GHz.

La qualité de la mesure est liée à la taille du réseau et aux caractéristiques (sensibilité et temporelle) du détecteur photoélectrique.

Elle repose en outre notamment sur une localisation précise de chacun des réseaux de Bragg de la pluralité de réseaux de Bragg gravés dans la fibre optique.

Cette localisation est par exemple vérifiée préalablement avec un réflectomètre, mesurant par exemple la diffusion de Rayleigh ; une incertitude de mesure associée est alors généralement comprise entre environs 30 µm et environ 100 µm.

Optionnellement, pour renforcer la tenue mécanique de la fibre, la fibre optique comporte avantageusement un gainage autour d'au moins une zone dénudée où a été réalisé un marquage d'un réseau de Bragg. En effet, pour réaliser un marquage d'un réseau de Bragg, il est nécessaire de retirer un revêtement de protection de la fibre optique (par exemple en polymère) là où le marquage doit être réalisé, et ceci peut fragiliser localement la fibre optique.

Optionnellement, le dispositif comporte plusieurs fibres optiques à réseaux de Bragg comportant chacune une pluralité de réseaux de Bragg configurés pour former une série de capteurs, c'est-à-dire de fibres à réseaux de Bragg.

Chaque fibre optique à réseaux de Bragg est alors optionnellement associée à une source différente, qui émet par exemple dans une bande spectrale différente des autres.

Les fibres sont par exemple agencées en série et le détecteur reçoit par exemple l'ensemble du rayonnement réfléchi par toutes les fibres.

Selon un autre aspect, est également proposé un procédé de caractérisation d'un phénomène physique comportant l'implantation d'au moins une fibre optique à réseaux de Bragg transversalement à un front de propagation d'un phénomène physique à caractériser et comportant une pluralité de réseaux de Bragg entre une première extrémité et une seconde extrémité, chaque réseau de Bragg étant configuré pour réfléchir une bande étroite de longueurs d'onde spécifiques qui lui est associée et, lors d'un passage du phénomène physique menant à une ablation progressive de la fibre optique comportant la pluralité de réseaux de Bragg, le procédé comportant :
- Une étape d'émission d'un rayonnement par au moins une source d'éclairage laser dans une large bande de longueurs d'onde contenant les longueurs d'ondes associées aux réseaux de Bragg et une étape d'injection de ce rayonnement dans la fibre optique par ladite première extrémité ; et
- Une étape de captation des rayonnements réfléchis par les réseaux de Bragg de ladite fibre optique à réseaux de Bragg ;
caractérisé en ce qu'il comporte en outre une étape de mesure par un détecteur photoélectrique, en fonction du temps, d'un flux global de l'ensemble des rayonnements réfléchis ainsi captés.

Le procédé est avantageusement mis en oeuvre par le dispositif comprenant tout ou partie des caractéristiques décrites précédemment.

Par exemple, le circulateur transmet le rayonnement laser de la source laser à la première extrémité de la fibre optique et capte les rayonnements réfléchis renvoyés par les réseaux de Bragg de la fibre optique à réseaux de Bragg par la première extrémité et, par exemple, les dirige vers le détecteur photoélectrique.

En outre, chaque réseau de Bragg de l'au moins une fibre optique est de préférence court et à pas constant avec un pas qui lui est propre.

Le procédé comporte aussi ensuite une étape de conversion du flux global du rayonnement réfléchi en un signal électrique par le détecteur photoélectrique. Et par exemple il comporte aussi une étape de numérisation du signal électrique à une cadence prédéterminée par un numériseur.

Au passage d'une onde par exemple, les réseaux de Bragg de la pluralité de réseaux de Bragg de la fibre optique sont successivement détruits. Ceci se traduit par une chute locale du signal sur une courbe représentant par exemple une amplitude du signal en fonction du temps.

Une étape d'identification d'au moins une chute d'amplitude globale d'un signal électrique et d'une date correspondant à ladite chute, traduisant une destruction d'un réseau de Bragg de la pluralité de réseaux de Bragg de la fibre optique, est alors possible et permet ainsi par exemple de déterminer, par exemple par une étape de calcul, une position du front d'onde à un instant donné et/ou de calculer une vitesse, moyenne ou instantanée, de propagation du front d'onde. Cette étape est par exemple réalisée par un ordinateur.

Autrement dit, un traitement du signal électrique permet de localiser l'information temporelle correspondant à la destruction d'un réseau de Bragg.

Il est alors ensuite possible de calculer une vitesse, moyenne par exemple, de propagation du phénomène physique.

Pour cela, il est intéressant d'avoir une connaissance précise de la localisation de chaque réseau de Bragg. Il est aussi intéressant de connaitre précisément la distance séparant deux réseaux consécutifs de la pluralité de réseaux de Bragg de la fibre optique.

A cet effet, le procédé comporte possiblement une étape préalable de réalisation d'un marquage d'au moins une première gravure et une deuxième gravure, à une distance comprise entre environ 400 nm et environ 600 nm de la première gravure, voire par exemple entre environ 470 et environ 540 nm, dans la fibre optique par modification locale de l'indice n de la fibre optique par un laser pour réaliser au moins un réseau de Bragg, par exemple selon la technique du masque de phase.

Chaque gravure va ainsi permettre de diffracter une petite partie de la lumière incidente. Il est ainsi préférable d'avoir un minimum de gravures dans la fibre, et la distance entre deux gravures consécutives détermine ainsi la longueur d'onde réfléchie par un réseau de Bragg.

Par exemple, l'étape préalable de réalisation d'un marquage comporte une étape de réalisation d'environ 200 à 6000 gravures, avec un pas compris entre environ 400 nm et environ 600 nm, voire par exemple entre environ 470 et 540 nm, sur une longueur de gravure la plus courte possible, par exemple inférieure ou égale à environ 3 mm, par exemple comprise entre environ 0,05 mm et environ 3 mm, par exemple environ 1 mm, voire comprise entre environ 0,1 et environ 0,2 mm.

Ceci permet ainsi de réaliser un réseau de Bragg court et à pas constant. Cette étape est par exemple répétée pour chaque réseau de Bragg à créer, avec un pas différent pour assurer le fait que chaque réseau de Bragg renvoie un domaine spectral qui lui est spécifique.

Ceci permet une signature photométrique sans ambigüité.

En outre, chaque réseau de Bragg est par exemple réalisé à une distance comprise entre environ 5 mm et environ 25 mm d'un autre réseau de Bragg directement voisin, selon la longueur de chaque réseau et la résolution de mesure souhaitée, par exemple environ 10 mm, ce qui correspond à une incertitude d'environ 1% pour une vitesse de phénomène physique d'environ 1000 m/s.

Par exemple, deux réseaux de Bragg consécutifs de la pluralité de réseaux de Bragg sont distants les uns des autres d'une même distance.

Le procédé comporte aussi par exemple une étape de localisation d'au moins certains des réseaux de Bragg de la pluralité de réseaux de Bragg par un réflectomètre.

La localisation d'un réseau de Bragg consiste en outre par exemple à localiser spatialement (ou temporellement) un maximum d'un pic de réflexion du réseau de Bragg.

Par exemple, l'étape de localisation d'au moins certains des réseaux de Bragg de la pluralité de réseaux de Bragg par un réflectomètre comporte une étape de mesure d'une diffusion de Rayleigh.

L'invention, selon un exemple de réalisation, sera bien comprise et ses avantages apparaitront mieux à la lecture de la description détaillée qui suit, donnée à titre indicatif et nullement limitatif, en référence aux dessins annexés dans lesquels :
La figure 1 montre une représentation schématique d'une fibre à réseaux de Bragg à pas constant de type connu,
La figure 2 montre une représentation schématique d'une fibre à réseaux de Bragg à pas variable de type connu,
La figure 3 présente un dispositif selon un exemple de réalisation de la présente invention,
La figure 4 présente un exemple de réponse temporelle d'une fibre optique à neuf réseaux de Bragg avec chaque réseau présentant une longueur de 1 mm, et
La figure 5 présente un exemple de réponse temporelle pour une fibre optique dont chaque réseau de Bragg a une longueur de 1 mm comparée à une réponse temporelle pour une fibre optique dont chaque réseau de Bragg a une longueur de 3 mm.

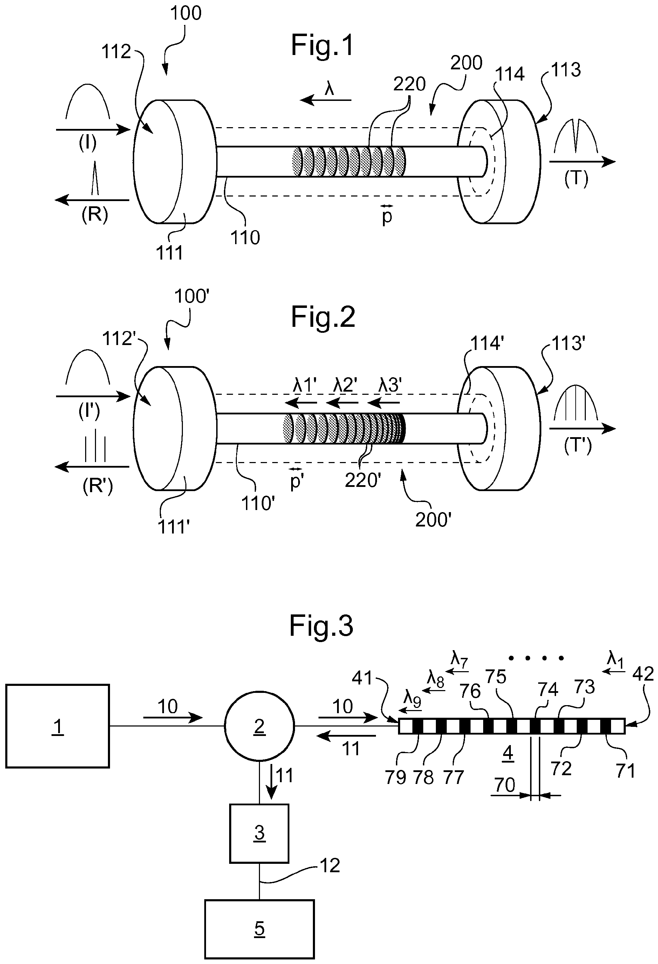

Les figures 1 et 2 présentent schématiquement une fibre optique 100 comportant un coeur 110, une gaine optique 114, aussi appelée « cladding » et qui permet de conduire la lumière, et une gaine mécanique 111, aussi appelée « buffer coating », servant de revêtement de protection (les mêmes références numériques affectées d'un « prime » désignent les éléments analogues sur le mode de réalisation de la figure 2). Le coeur 110 se caractérise ici par un indice de réfraction noté « n ». La fibre optique 100 présente une première extrémité 112 et une deuxième extrémité 113. Dans le cadre de la présente description, la première extrémité 112 correspond à une extrémité de la fibre 100 par laquelle un rayonnement lumineux arrive dans la fibre 100 (soit le rayonnement incident), et la deuxième extrémité 113 correspond à une extrémité de la fibre 100 par laquelle le rayonnement lumineux sort de la fibre 100, c'est-à-dire après avoir traversé la fibre 100 (soit le rayonnement transmis).

La fibre optique 100 comporte en outre ici un réseau de Bragg 200. Le réseau de Bragg 200 comporte plusieurs interfaces 220, également appelées ici gravures, ou encore modulations d'indice, distantes les unes des autres d'un pas noté « p », qui est le pas caractéristique du réseau considéré.

Pour réaliser des réseaux de Bragg au sein d'une fibre optique, il existe par exemple un procédé de photo-inscription de la fibre avec un laser à rayonnement ultraviolet. Le procédé de photo-inscription utilise par exemple une méthode holographique ou une méthode de masque de phase. L'indice n de la fibre est ainsi modifié périodiquement et de façon permanente en fonction de l'intensité lumineuse du laser de photo-inscription à laquelle la fibre est soumise.

Les interfaces créées composent ainsi une suite de modulations périodiques de l'indice de réfraction n du coeur de la fibre 100. Le réseau ainsi formé se caractérise par une capacité à réfléchir une longueur d'onde, caractéristique du réseau, dite « longueur d'onde de Bragg » notée ici « λ_{B} », et qui est fonction du pas p du réseau gravé dans la fibre et de l'indice n du coeur de la fibre selon la relation : λ_{B}=2np, à une température de référence. Pour un rayonnement lumineux d'un spectre donné incident dans la fibre, une partie du spectre autour de la longueur d'onde de Bragg est donc réfléchie, alors que le reste est transmis. Une fibre optique à réseaux de Bragg peut donc être utilisée pour une analyse en transmission et en réflexion.

En première approximation, il existe deux types de réseaux de Bragg : les réseaux à pas courts d'une part et les réseaux à pas longs d'autre part. Les réseaux à pas courts sont souvent nommés FBG pour « Fiber Bragg Grating », alors que les réseaux à pas longs sont souvent nommés LPG pour « Long-Period Fiber ». Ces deux types de réseaux de Bragg peuvent ensuite être distingués en deux catégories : les réseaux à pas constant (voir par exemple figure 1) et les réseaux à pas variable, dits aussi « chirpés » (voir par exemple figure 2).

Dans le mode de réalisation de la figure 1, le pas p est constant, c'est-à-dire que deux interfaces 220 consécutives sont toutes séparées d'une même distance, alors que dans le mode de réalisation de la figure 2, le pas p' est variable le long de la fibre. Plus particulièrement dans le présent exemple, le pas p' est décroissant depuis la première extrémité 112' vers la deuxième extrémité 113'.

Dans le cas de la fibre de la figure 1, pour un rayonnement incident (I) d'un spectre donné, le rayonnement réfléchi (R) est alors un rayonnement de longueur d'onde À et le rayonnement transmis (T) est alors un rayonnement de même spectre que le rayonnement incident (I) privé d'une partie du spectre de longueur d'onde À.

Dans le cas de la fibre de la figure 2, pour un rayonnement incident (I') d'un spectre donné, par exemple identique à celui de la figure 1, le rayonnement réfléchi (R') est alors un rayonnement de longueurs d'onde λ1', À2' et À3' par exemple, et le rayonnement transmis (T') est alors un rayonnement de même spectre que le rayonnement incident (I') privé de parties du spectre de longueur d'onde λ1', À2' et λ3'.

Ainsi, lors de l'utilisation d'une fibre optique à réseaux de Bragg au sein d'un dispositif de mesure, le passage d'une onde, par exemple une onde de choc, qui est une onde de compression, ou plus généralement l'application d'une contrainte sur la fibre, ou une variation de la température (par rapport à la température de référence précitée) fait varier le pas du réseau ce qui a donc une incidence sur la ou les longueur(s) d'onde du rayonnement réfléchi. L'analyse de la réponse spectrale, c'est-à-dire du spectre du rayonnement réfléchi ou transmis, par exemple une analyse fréquentielle du rayonnement transmis ou réfléchi par le réseau, renseigne sur le degré de sollicitation de la fibre optique.

Autrement dit, le fonctionnement d'un capteur comportant une fibre optique à réseaux de Bragg repose généralement sur la mesure d'un décalage de la (ou des) longueur(s) d'onde du réseau, qui varie(nt) en fonction de la température et d'une contrainte appliquée à la fibre optique, par rapport à la (ou les) longueur(s) d'onde de Bragg caractéristique(s) du réseau à la température de référence et dans un état de repos.

A cet effet, il est donc traditionnellement recherché de réaliser des réseaux de Bragg chirpés les plus longs possible afin de pouvoir étudier de manière continue une évolution de perte de longueurs d'onde réfléchies lors de l'ablation de la fibre ou de mesurer le décalage en longueur d'onde lors d'une sollicitation.

Dans le cas d'analyse spectrale, il serait aussi intéressant de pouvoir dissocier les sollicitations dues à des variations de température de celles liées à des variations de contraintes ou déformations.

Enfin, les techniques d'analyse spectrale sont généralement limitées notamment à cause de leur résolution temporelle.

Dans le cas d'analyse de phénomènes physiques, ces techniques sont donc insuffisantes pour avoir, par exemple, une connaissance précise d'une position d'un front d'onde à un instant donné ou d'une vitesse de propagation du front.

La figure 3 présente un exemple de réalisation d'un dispositif selon l'invention.

Le dispositif comporte une source d'éclairage laser 1.

La source d'éclairage laser 1 est par exemple une source d'éclairage laser à spectre large, c'est-à-dire configurée pour émettre par exemple un rayonnement de spectre de largeur comprise entre environ 50 nm et environ 150 nm, par exemple environ 100 nm de large. La source d'éclairage laser est par exemple de type ASE (« Amplified Stimulated Emission »). Elle est configurée pour émettre dans une bande spectrale connue. Le rayonnement émis par la source d'éclairage laser 1 est par exemple autour d'environ 900 nm (par exemple entre environ 880 nm et environ 930 nm), ou 1300 nm (1250-1350 nm) ou 1550 nm (1528 - 1564 nm) en fonction du dopant utilisé. Un avantage notable d'une source émettant autour de 1550 nm est d'avoir une très faible atténuation du signal, de l'ordre de 0,2 dB par kilomètre par exemple, pour une fibre en silice.

La source d'éclairage laser 1 est par exemple ici une source d'émission spontanée amplifiée de fibres dopées à l'Erbium d'une puissance de 10 mW. Le rayonnement émis par la source d'éclairage laser 1 est par exemple compris entre 1530 nm et 1580 nm de longueur d'onde.

Le rayonnement émis par la source d'éclairage laser 1, aussi appelé ici rayonnement induit 10, est transmis à une fibre optique 4 à réseaux de Bragg en passant par un circulateur optique 2.

La fibre optique 4 est par exemple une fibre optique qui est ici monomode, par exemple en silice, dont la gaine optique (dit « cladding ») mesure environ 80 µm, et présente par exemple un coeur d'un diamètre d'environ 9 µm. Elle comporte par exemple ici neuf réseaux de Bragg, identifiés ici par les références numériques 71 à 79. La fibre optique 4 présente par exemple un indice n de valeur constante. L'indice n d'une fibre en silice est par exemple d'environ 1,4682 pour un rayonnement incident d'environ 1550 nm. Chacun des réseaux de Bragg a été préalablement gravé dans la fibre optique 4 de manière à ce que chaque réseau de Bragg est configuré pour réfléchir une partie du rayonnement induit 10 différente de celle réfléchie par les autres réseaux de Bragg. La longueur d'onde de Bragg de chacun des réseaux est schématiquement indiquée ici par les références λ1 à λ9 sur la figure 3. Le décalage spectrale est par exemple d'environ au moins 1 nm voire 5 nm pour éviter toute diaphonie.

Pour cela, chaque réseau de Bragg est par exemple un réseau de Bragg à pas constant, avec le pas de chaque réseau de Bragg qui est différent de celui des autres réseaux de Bragg. Le pas de chacun des réseaux de Bragg est par exemple compris entre 521 nm pour réfléchir une longueur d'onde d'environ 1530 nm, nm et environ 538 nm pour réfléchir une longueur d'onde d'environ 1580 nm.

Le spectre de chaque réseau de Bragg est par exemple ici séparé de ses voisins d'environ 2 nm à 8 nm, de sorte à éviter un chevauchement de bande spectrale entre deux réseaux de Bragg consécutifs.

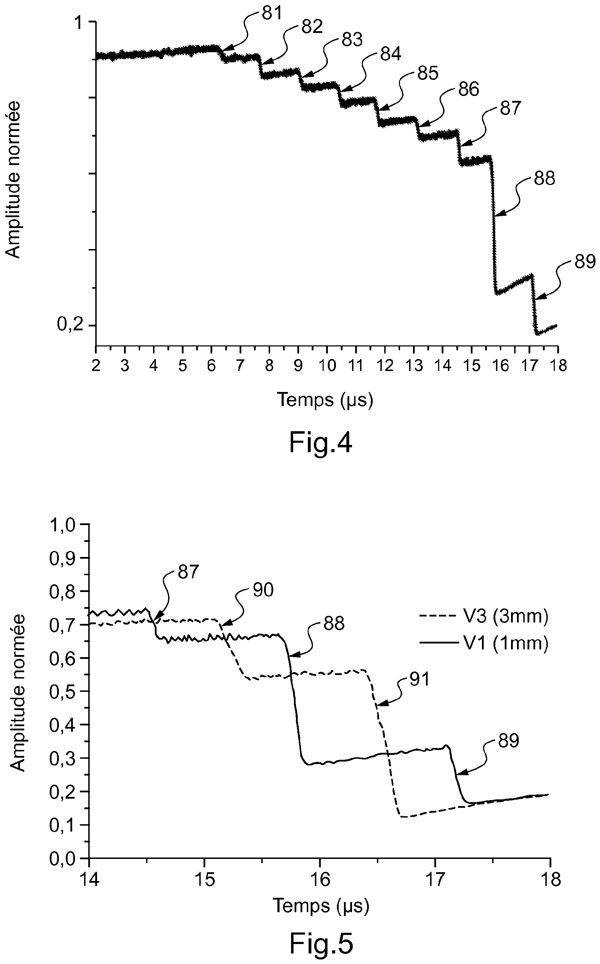

Chaque réseau de Bragg présente aussi ici une longueur de gravure 70 la plus courte possible, et est par exemple comprise entre environ 0,05 mm et environ 3 mm. En effet, la longueur de gravure d'un réseau de Bragg influence la réponse (temporelle et en amplitude comme ceci est par exemple visible sur la figure 5 qui est décrite ultérieurement) de la fibre optique 4 à réseaux de Bragg, et donc une incertitude de mesure associée. Cependant, des tests ont révélés qu'une longueur de gravure d'environ un millimètre donne déjà des résultats de mesures satisfaisants.

De manière générale, un compromis est à trouver entre la longueur de gravure d'un réseau de Bragg et sa capacité de réflexion, c'est-à-dire la variation d'indice correspondant à une interface du réseau et le nombre d'interfaces dans chaque réseau.

Dans le présent exemple, il est considéré que chaque réseau, avec une longueur de gravure de 1 mm, a une largeur spectrale d'environ 2 nm à -3dB.

Ainsi, l'ensemble des réseaux de Bragg de la fibre optique 4 sont configurés pour couvrir une bande spectrale entre 1530 nm et 1580 nm, en rapport avec la source spectrale d'émission de la source laser 1. Leur répartition spectrale est par exemple centrée sur les longueurs d'onde suivantes: 1535 nm, 1540 nm, 1545 nm, 1550 nm, 1555 nm, 1560 nm, 1565 nm, 1570 nm, 1575 nm. Le spectre réfléchi de chaque réseau de Bragg serait alors par exemple séparé de ses voisins (en terme de longueur d'onde) d'environ 3 nm, en considérant une largueur de 2 nm du spectre réfléchi. La position spectrale des réseaux gravés dans la fibre est possiblement quelconque puisqu'il ne s'agit pas d'analyser la réponse spectrale mais une évolution du flux global du signal réfléchi. Ainsi l'arrangement des réseaux de Bragg dans la fibre peut être choisi en fonction de leur taux de réflexion (dépendant de la longueur d'onde de la source, de l'amplitude et de la largeur spectrale réfléchie). Les réseaux présentant un taux de réflexion élevé sont alors par exemple disposés de préférence loin d'un détecteur 3, autrement dit, proche de l'extrémité 42.

Comme mentionné précédemment, le circulateur optique 2 est configuré pour transmettre le rayonnement émis par la source d'éclairage laser 1 à la fibre optique 4. Le rayonnement induit 10 entre dans la fibre optique 4 par une première extrémité 41 de la fibre optique 4 et est réfléchi successivement par l'ensemble des réseaux de Bragg contenus par la fibre optique 4. Un rayonnement, dit rayonnement réfléchi 11, se propage alors depuis la fibre optique 4 vers un détecteur photoélectrique 3 en passant par le circulateur optique 2. En effet, le circulateur optique 2 est configuré pour à la fois d'une part transmettre le rayonnement de la source d'éclairage laser, et d'autre part, séparer le rayonnement induit 10 du rayonnement réfléchi 11.

Le détecteur photoélectrique 3 est aussi ici configuré pour convertir le rayonnement réfléchi 11 en un signal électrique 12.

Le détecteur photoélectrique 3 est par exemple un détecteur photoélectrique avec une bande passante d'environ au moins 1 GHz, ce qui va définir la résolution temporelle du dispositif.

Un numériseur 5, positionné ici en sortie du détecteur photoélectrique 3, est configuré pour enregistrer le signal électrique 12 en sortie du détecteur photoélectrique 3 à une cadence d'enregistrement prédéterminée, par exemple tous les 0,5 ns.

Une amplitude du signal électrique 12 à chaque instant est ainsi connue.

A l'issue de ces mesures, un traitement du signal permet de déterminer précisément la localisation spatiale de chaque évènement temporel détecté et/ou de calculer une vitesse de propagation d'un phénomène physique.

Pour cela, la connaissance précise d'une distance entre deux réseaux consécutifs, grâce par exemple à des mesures avec un réflectomètre avant expérience, permet de calculer une vitesse moyenne de propagation du phénomène physique étudié.

Un réflectomètre intéressant pour réaliser des mesures de position de chaque réseau et/ou de distance entre deux réseaux consécutifs (mesure de la réflectivité de chaque réseau) est par exemple un réflectomètre de type OBR™ (pour « Optical Backscatter Reflectometer™ ») de la société Luna Technologies. Un tel réflectomètre permet d'analyser la diffusion de Rayleigh de la fibre.

La figure 4 présente un exemple de résultat, pour une fibre à réseaux de Bragg plongée dans du nitrométhane (qui est un explosif liquide), obtenu avec une source laser 1 d'émission spontanée amplifiée de fibres dopées à l'Erbium d'une puissance de 10 mW, et avec une fibre optique 4 de 80 µm de diamètre de coeur comportant une série de neuf réseaux de Bragg, chacun à pas constant compris entre environ 521 nm et environ 538 nm pour chaque réseau, de longueur de gravure de 1 mm avec une largeur spectrale d'environ 2 nm à -3dB, et dont le spectre de chaque réseau (identifié précédemment par les référence λ1 à λ9 dans le présent exemple de réalisation) est séparé spectralement de celui de ses voisins d'environ 2 nm à 8 nm. Deux réseaux consécutifs sont en outre séparés l'un de l'autre d'environ 9 mm.

Ainsi, le graphe de la figure 4 montre une courbe représentant une évolution d'une amplitude de signal acquis au niveau du numériseur 5 en fonction du temps (en microsecondes). Il apparait que la courbe comporte neuf décrochements ou affaiblissement, indiqués ici par les références numérique 81 à 89. L'amplitude maximale du signal est par exemple ici de l'ordre de 225 mV.

Ceci montre qu'au passage d'une onde de détonation, la fibre optique est progressivement détruite. A chaque ablation d'un réseau de Bragg, le signal est amoindri, c'est-à-dire la réflexion du rayonnement induit dans la fibre chute.

Le détecteur photoélectrique 3 enregistre une succession d'affaiblissements.

Une localisation temporelle d'une chute de signal avec la connaissance précise de la position du réseau correspondant permet donc de déterminer une vitesse de propagation d'une onde de détonation.

Ainsi par exemple, ici, le rayonnement induit arrive dans la fibre optique 4 par la première extrémité 41 alors que l'onde de choc se propage à partir d'une deuxième extrémité 42 de la fibre optique 4 (indiquée figure 3). C'est donc le premier réseau de Bragg, numéroté ici 71 qui est détruit en premier, puis le deuxième réseau de Bragg et ainsi de suite jusqu'au neuvième réseau de Bragg numéroté ici 79. A la destruction du premier réseau de Bragg 71, l'amplitude de signal chute selon l'affaiblissement 81 et ainsi de suite jusqu'à la destruction du neuvième réseau 79 à laquelle correspond l'affaiblissement 89.

La figure 5 présente un graphe qui montre un détail de la courbe de la figure 4 et la compare à celle d'un même essai réalisé avec une fibre optique à neuf réseaux de Bragg également, dont chaque réseau à une longueur de 3 mm. Les réseaux de 1 mm sont séparés de 9 mm et ceux de 3 mm sont séparés de 7 mm. En considérant comme référence le milieu de chaque réseau, la distance est équivalente à 10 mm. La courbe qui correspond à l'essai dont les réseaux de Bragg de la fibre optique mesurent 1 mm est identifiée par la référence V1 en trait plein, et la courbe qui correspond à l'essai dont les réseaux de Bragg de la fibre optique mesurent 3 mm est identifiée par la référence V3 en pointillés.

La courbe V3 permet de mieux mettre en évidence une pente présente lors de chaque affaissement de courbe. Cette pente est directement reliée à la longueur de gravure de chaque réseau. En effet, au cours de sa destruction progressive, chaque réseau réfléchi de moins en moins de rayonnement. Plus la longueur de gravure est courte, plus la destruction du réseau apparaitra sur une courbe comme correspondant à un évènement instantané. Ainsi par exemple, l'affaiblissement 88 aurait une durée d'environ 144 ns et l'affaiblissement 89 une durée d'environ 151 ns ; alors qu'un affaiblissement identifié par la référence 90 aurait une durée d'environ 251 ns et un affaiblissement identifié par la référence 91 aurait une durée d'environ 276 ns. Il est par exemple possible de considérer que la localisation de l'événement se fait dès la décroissance du signal correspondant à la position spatiale du maximum de réflexion du réseau (déterminée au réflectomètre).

Bien sûr, la présente invention ne se limite ni à la description précédente ni aux figures annexées, mais s'étend à toute variante à la portée de l'homme du métier dans la limite de la protection définie par les revendications.

## Revendications

1. Dispositif de caractérisation d'un phénomène physique comportant :
• au moins une fibre optique (4) à réseaux de Bragg, destinée à être disposée transversalement à un front de propagation d'un phénomène physique à caractériser et comportant une pluralité de réseaux de Bragg entre une première extrémité (41) et une seconde extrémité (42), chaque réseau de Bragg étant configuré pour réfléchir une bande étroite de longueurs d'onde spécifiques qui lui est associée,
• au moins une source d'éclairage laser (1) à large spectre, configurée pour émettre un rayonnement laser contenant les longueurs d'ondes associées aux réseaux de Bragg,
• un circulateur optique (2) configuré pour transmettre le rayonnement laser de l'au moins une source laser (1) à la première extrémité (41) de la fibre optique (4) et capter les rayonnements réfléchis renvoyés par les réseaux de Bragg de la fibre optique (4) à réseaux de Bragg par la première extrémité (41),
**caractérisé en ce que** chaque réseau de Bragg de l'au moins une fibre optique est court et à pas constant avec un pas qui lui est propre, et **en ce que** le dispositif comporte en outre un détecteur photoélectrique (3) configuré pour mesurer en sortie du circulateur optique (2), en fonction du temps, un flux global de l'ensemble des rayonnements réfléchis captés par le détecteur photoélectrique (3).

2. Dispositif selon la revendication 1, **caractérisé en ce que** chaque réseau de Bragg de la pluralité de réseaux de Bragg de la fibre optique (4) a une longueur de gravure comprise entre environ 0,05 mm et environ 3 mm.

3. Dispositif selon l'une quelconque des revendications 1 ou 2, **caractérisé en ce que** les réseaux de Bragg de la pluralité de réseaux de Bragg sont configurés pour réfléchir conjointement des longueurs d'onde sur sensiblement toute la largeur du rayonnement émis par l'au moins une source d'éclairage laser (1) à large spectre.

4. Dispositif selon l'une quelconque des revendications 1 à 3, **caractérisé en ce que** chaque réseau de Bragg de la pluralité de réseaux de Bragg comporte entre environ 200 et environ 6000 gravures.

5. Dispositif selon l'une quelconque des revendications 1 à 4, **caractérisé en ce que** deux réseaux de Bragg consécutifs de la pluralité de réseaux de Bragg sont distants l'un de l'autre d'une distance comprise entre environ 5 mm et environ 25 mm.

6. Dispositif selon l'une quelconque des revendications 1 à 5, **caractérisé en ce que** deux réseaux de Bragg consécutifs de la pluralité de réseaux de Bragg sont distants les uns des autres d'une même distance.

7. Dispositif selon l'une quelconque des revendications 1 à 6, **caractérisé en ce que** chaque réseau de Bragg a un pas compris entre environ 400 nm et environ 600 nm.

8. Dispositif selon l'une quelconque des revendications 1 à 7, **caractérisé en ce que** chaque réseau de Bragg de la pluralité de réseaux de Bragg est configuré pour réfléchir un signal d'une largeur spectrale comprise entre environ 1 nm et environ 10 nm à -3dB autour d'une longueur d'onde qui lui est spécifique.

9. Dispositif selon l'une quelconque des revendications 1 à 8, **caractérisé en ce que** chaque réseau de Bragg de la pluralité de réseaux de Bragg réfléchit une longueur d'onde distante d'environ 2 nm à 8 nm de la longueur d'onde réfléchie par un autre réseau de Bragg.

10. Dispositif selon l'une quelconque des revendications 1 à 9, **caractérisé en ce que** chaque réseau de Bragg de la pluralité de réseaux de Bragg est apodisé.

11. Dispositif selon l'une quelconque des revendications 1 à 10, **caractérisé en ce qu'**il comporte plusieurs fibres optiques (4) à réseaux de Bragg comportant chacune une pluralité de réseaux de Bragg configurés pour former une série de capteurs.

12. Dispositif selon l'une quelconque des revendications 1 à 11, **caractérisé en ce que** l'au moins une fiche optique (4) est monomode.

13. Procédé de caractérisation d'un phénomène physique comportant l'implantation d'au moins une fibre optique (4) à réseaux de Bragg transversalement à un front de propagation d'un phénomène physique à caractériser et comportant une pluralité de réseaux de Bragg entre une première extrémité (41) et une seconde extrémité (42), chaque réseau de Bragg étant configuré pour réfléchir une bande étroite de longueurs d'onde spécifiques qui lui est associée et, lors d'un passage du phénomène physique menant à une ablation progressive de la fibre optique (4) comportant la pluralité de réseaux de Bragg, le procédé comportant :
• Une étape d'émission d'un rayonnement par au moins une source d'éclairage laser (1) dans une large bande de longueurs d'onde contenant les longueurs d'ondes associées aux réseaux de Bragg et une étape d'injection de ce rayonnement dans la fibre optique (4) par ladite première extrémité (41) ; et
• Une étape de captation des rayonnements réfléchis par les réseaux de Bragg de ladite fibre optique (4) à réseaux de Bragg ;
**caractérisé en ce qu'**il comporte en outre :
• Une étape de mesure par un détecteur photoélectrique, en fonction du temps, d'un flux global de l'ensemble des rayonnements réfléchis ainsi captés.

14. Procédé selon la revendication 13, **caractérisé en ce qu'**il comporte une étape d'identification d'au moins une chute d'amplitude globale d'un signal électrique et d'une date correspondant à ladite chute, traduisant une destruction d'un réseau de Bragg de la pluralité de réseaux de Bragg de la fibre optique.

15. Procédé selon l'une quelconque des revendications 13 ou 14, **caractérisé en ce qu'**il comporte une étape de calcul d'une position d'un front d'onde à un instant donné et/ou d'une vitesse de propagation du front d'onde.

## Patentansprüche

1. Vorrichtung zum Charakterisieren einer physikalischen Erscheinung, enthaltend:
• zumindest eine Lichtleitfaser (4) mit Bragg-Gittern, die dazu bestimmt ist, quer zu einer Ausbreitungsfront einer zu charakterisierenden physikalischen Erscheinung angeordnet zu werden, und eine Mehrzahl von Bragg-Gittern zwischen einem ersten Ende (41) und einem zweiten Ende (42) enthält, wobei jedes Bragg-Gitter dazu ausgelegt ist, ein schmales Band spezifischer Wellenlängen zu reflektieren, das diesem zugeordnet ist,
• zumindest eine Breitspektrum-Laserbeleuchtungsquelle (1), die dazu ausgelegt ist, eine Laserstrahlung zu emittieren, die die den Bragg-Gittern zugeordneten Wellenlängen enthält,
• einen optischen Zirkulator (2), der dazu ausgelegt ist, die Laserstrahlung von der zumindest einen Laserquelle (1) zum ersten Ende (41) der Lichtleitfaser (4) zu übertragen und die reflektierten Strahlungen aufzunehmen, die von den Bragg-Gittern der Bragg-Gitter-Lichtleitfaser (4) über das erste Ende (41) umgelenkt werden,
**dadurch gekennzeichnet, dass**
jedes Bragg-Gitter der zumindest einen Lichtleitfaser kurz ist und eine konstante Periode aufweist, mit einer diesem eigenen Periode, und dass die Vorrichtung ferner einen fotoelektrischen Detektor (3) umfasst, der dazu ausgelegt ist, am Ausgang des optischen Zirkulators (2) einen Gesamtfluss aller reflektierten Strahlungen, die vom fotoelektrischen Detektor (3) erfasst werden, zeitabhängig zu messen.

2. Vorrichtung nach Anspruch 1, **dadurch gekennzeichnet, dass** jedes Bragg-Gitter aus der Mehrzahl von Bragg-Gittern der Lichtleitfaser (4) eine Ätzlänge zwischen etwa 0,05 mm und etwa 3 mm aufweist.

3. Vorrichtung nach einem der Ansprüche 1 oder 2, **dadurch gekennzeichnet, dass** die Bragg-Gitter aus der Mehrzahl von Bragg-Gittern dazu ausgelegt sind, die Wellenlängen im Wesentlichen über die gesamte Länge der von der zumindest einen Breitspektrum-Laserbeleuchtungsquelle (1) emittierten Strahlung gemeinsam zu reflektieren.

4. Vorrichtung nach einem der Ansprüche 1 bis 3, **dadurch gekennzeichnet, dass** jedes Bragg-Gitter aus der Mehrzahl von Bragg-Gittern zwischen etwa 200 und etwa 6000 Ätzungen enthält.

5. Vorrichtung nach einem der Ansprüche 1 bis 4, **dadurch gekennzeichnet, dass** zwei aufeinanderfolgende Bragg-Gitter aus der Mehrzahl von Bragg-Gittern mit einem Abstand zwischen etwa 5 mm und etwa 25 mm voneinander beabstandet sind.

6. Vorrichtung nach einem der Ansprüche 1 bis 5, **dadurch gekennzeichnet, dass** zwei aufeinanderfolgende Bragg-Gitter aus der Mehrzahl von Bragg-Gittern mit einem gleichen Abstand voneinander beabstandet sind.

7. Vorrichtung nach einem der Ansprüche 1 bis 6, **dadurch gekennzeichnet, dass** jedes Bragg-Gitter eine Periode zwischen etwa 400 nm und etwa 600 nm aufweist.

8. Vorrichtung nach einem der Ansprüche 1 bis 7, **dadurch gekennzeichnet, dass** jedes Bragg-Gitter aus der Mehrzahl von Bragg-Gittern dazu ausgelegt ist, ein Signal einer spektralen Länge zwischen etwa 1 nm und etwa 10 nm bei -3dB um eine dafür spezifische Wellenlänge zu reflektieren.

9. Vorrichtung nach einem der Ansprüche 1 bis 8, **dadurch gekennzeichnet, dass** jedes Bragg-Gitter aus der Mehrzahl von Bragg-Gittern eine Wellenlänge reflektiert, die etwa 2 nm bis 8 nm von der Wellenlänge, die von einem weiteren Bragg-Gitter reflektiert wird, beabstandet ist.

10. Vorrichtung nach einem der Ansprüche 1 bis 9, **dadurch gekennzeichnet, dass** jedes Bragg-Gitter aus der Mehrzahl von Bragg-Gittern apodisiert ist.

11. Vorrichtung nach einem der Ansprüche 1 bis 10, **dadurch gekennzeichnet, dass** sie mehrere Lichtleitfasern (4) mit Bragg-Gittern enthält, die jeweils eine Mehrzahl von Bragg-Gittern enthalten, die dazu ausgelegt sind, eine Reihe von Sensoren zu bilden.

12. Vorrichtung nach einem der Ansprüche 1 bis 11, **dadurch gekennzeichnet, dass** die zumindest eine Lichtleitfaser (4) eine Singlemodefaser ist.

13. Verfahren zum Charakterisieren einer physikalischen Erscheinung, umfassend die Implantation zumindest einer Lichtleitfaser (4) mit Bragg-Gittern quer zu einer Ausbreitungsfront einer zu charakterisierenden physikalischen Erscheinung, welche Faser eine Mehrzahl von Bragg-Gittern zwischen einem ersten Ende (41) und einem zweiten Ende (42) enthält, wobei jedes Bragg-Gitter dazu ausgelegt ist, ein schmales Band spezifischer Wellenlängen, das diesem zugeordnet ist, zu reflektieren, und bei Auftreten der physikalischen Erscheinung zu einer progressiven Ablation der Lichtleitfaser (4), die die Mehrzahl von Bragg-Gittern enthält, führt, wobei das Verfahren umfasst:
• einen Schritt der Emission einer Strahlung von zumindest einer Laserbeleuchtungsquelle (1) in einem breiten Band von Wellenlängen, das die den Bragg-Gittern zugeordneten Wellenlängen enthält, und einen Schritt des Einkoppelns dieser Strahlung in die Lichtleitfaser (4) über das erste Ende (41); und
• einen Schritt des Erfassens der Strahlungen, die von den Bragg-Gittern der Bragg-Gitter-Lichtleitfaser (4) reflektiert werden;
**dadurch gekennzeichnet, dass**
es ferner umfasst:
• einen Schritt des Messens von einem Gesamtfluss aller so erfassten reflektierten Strahlungen zeitabhängig über einen fotoelektrischen Detektor.

14. Verfahren nach Anspruch 13, **dadurch gekennzeichnet, dass** es einen Schritt des Identifizierens von zumindest einem Gesamtamplitudenabfall eines elektrischen Signals und von einem Datum umfasst, das dem Abfall entspricht, was eine Zerstörung eines Bragg-Gitters aus der Mehrzahl von Bragg-Gittern der Lichtleitfaser widerspiegelt.

15. Verfahren nach einem der Ansprüche 13 oder 14, **dadurch gekennzeichnet, dass** es einen Schritt des Berechnens einer Position einer Wellenfront zu einem gegebenen Zeitpunkt und/oder einer Ausbreitungsgeschwindigkeit der Wellenfront umfasst.

## Claims

1. A device for characterizing a physical phenomenon comprising:
• at least one optical fiber (4) with Bragg gratings, for disposal transversely to a propagation front of a physical phenomenon to characterize and comprising a plurality of Bragg gratings between a first end (41) and a second end (42), each Bragg grating being configured to reflect a narrow band of specific wavelengths associated with it,
• at least one broad-spectrum laser illumination source (1), configured to emit laser radiation containing wavelengths associated with the Bragg gratings,
• an optical circulator (2) configured to transmit the laser radiation from the at least one laser source (1) to the first end (41) of the optical fiber (4) and to capture the reflected radiation sent back by the Bragg gratings of the optical fiber with Bragg gratings by the first end (41),
**characterized in that** each Bragg grating of the at least one optical fiber is short and of constant period with a period which is specific to it, and **in that** the device further comprises a photoelectric detector (3) configured to measure as output from the optical circulator (2), as a function of time, a total flux of all the reflected radiation captured by the photoelectric detector (3).

2. A device according to claim 1, **characterized in that** each Bragg grating of the plurality of Bragg gratings of the optical fiber (4) has an inscription length comprised between approximately 0.05 and approximately 3 mm.

3. A device according to any one of claims 1 or 2, **characterized in that** the Bragg gratings of the plurality of Bragg gratings are configured to conjointly reflect wavelengths over substantially the whole of the width of the radiation emitted by the at least one broad spectrum laser illumination source (1).

4. A device according to any one of claims 1 to 3, **characterized in that** each Bragg grating of the plurality of Bragg gratings comprises between approximately 200 and 6000 inscriptions.

5. A device according to any one of claims 1 to 4, **characterized in that** two consecutive Bragg gratings of the plurality of Bragg gratings are separated from each other by a distance comprised between approximately 5 mm and approximately 25 mm.

6. A device according to any one of claims 1 to 5, **characterized in that** two consecutive Bragg gratings of the plurality of Bragg gratings are separated from each other by a same distance.

7. A device according to any one of claims 1 to 6, **characterized in that** each Bragg grating has a period comprised between approximately 400 nm and approximately 600 nm.

8. A device according to any one of claims 1 to 7, **characterized in that** each Bragg grating of the plurality of Bragg gratings is configured to reflect a signal of spectral width comprised between approximately 1 nm and approximately 10 nm at -3dB around a wavelength specific to it.

9. A device according to any one of claims 1 to 8, **characterized in that** each Bragg grating of the plurality of Bragg gratings reflects a wavelength at a distance of approximately 2 nm to 8 nm from the wavelength reflected by another Bragg grating.

10. A device according to any one of claims 1 to 9, **characterized in that** each Bragg grating of the plurality of Bragg gratings is apodized.

11. A device according to any one of claims 1 to 10, **characterized in that** it comprises several optical fibers (4) with Bragg gratings each comprising a plurality of Bragg gratings configured to form a series of sensors.

12. A device according to any one of claims 1 to 11, **characterized in that** the at least one optical fiber (4) is single mode.

13. A method of characterizing a physical phenomenon comprising the implantation of at least one optical fiber (4) with Bragg gratings transversely to a propagation front of a physical phenomenon to characterize and comprising a plurality of Bragg gratings between a first end (41) and a second end (42), each Bragg grating being configured to reflect a narrow band of specific wavelengths associated with it, and, on passage of a physical phenomenon leading to progressive ablation of the optical fiber (4) comprising the plurality of Bragg gratings, the method comprising:
• a step of emitting radiation by at least one laser illumination source (1) in a broad band of wavelengths containing wavelengths associated with the Bragg gratings and a step of injecting this radiation into the optical fiber (4) by said first end (41); and
• a step of capturing the radiation reflected by the Bragg gratings of said optical fiber (4) with Bragg gratings;
**characterized in that** it further comprises:
• A step of measuring by a photoelectric detector, as a function of time, a total flux of all the reflected radiation thus captured.

14. A method according to claim 13, **characterized in that** it comprises a step of identifying at least one drop in overall amplitude of an electrical signal and of a date corresponding to said drop, expressing a destruction of a Bragg grating of the plurality of Bragg gratings of the optical fiber.

15. A method according to any one of claims 13 or 14, **characterized in that** it comprises a step of computing a position of the wave front at a given time and/or a velocity of propagation of the wave front.
